# EUROPEAN PATENT SPECIFICATION

(11) **EP 3 235 576 B1**
(45) Date of publication and mention of the grant of the patent: **23.10.2019**
(21) Application number: 16810699.5
(22) Date of filing: 04.01.2016
(51) Int. Cl.: B09B 3/00, E02D 31/00, B09B 1/00, E02D 31/02

(54) **MUNICIPAL SOLID WASTE LANDFILL BARRIER SYSTEM CAPABLE OF PROLONGING BREAKTHROUGH TIME OF LEACHATE AND MANUFACTURING METHOD THEREOF**
SICKERSCHUTZSYSTEM EINER DEPONIE ZUR VERLÄNGERUNG DER DURCHDRINGUNGSZEIT VON SICKERWASSER UND HERSTELLUNGSVERFAHREN DAFÜR
SYSTÈME ANTI-INFILTRATION DE DÉCHARGE PERMETTANT DE PROLONGER LA DURÉE DE PÉNÉTRATION DE LIXIVIAT ET PROCÉDÉ DE FABRICATION DE CELUI-CI

(30) Priority: 16.06.2015 CN 201510332514
(43) Date of publication of application: 25.10.2017
(73) Proprietor: Hohai University, Nanjing, Jiangsu 210098 (CN)
(72) Inventor: ZHU, Wei, Nanjing Jiangsu 210098 (CN); SHU, Shi, Nanjing Jiangsu 210098 (CN); WANG, Shengwei, Nanjing Jiangsu 210098 (CN); XU, Haoqing, Nanjing Jiangsu 210098 (CN); FAN, Xihui, Nanjing Jiangsu 210098 (CN); BAO, Jianping, Nanjing Jiangsu 210098 (CN); MIN, Fanlu, Nanjing Jiangsu 210098 (CN)
(74) Representative: Engelhard, Markus
(86) International application number: PCT/CN2016/070033
(87) International publication number: WO 2016/201958

(56) References cited:
- CN-A- 1 449 873
- CN-A- 1 557 577
- CN-A- 101 967 835
- CN-A- 104 863 184
- DE-A1- 3 717 884
- DE-C1- 4 009 387
- DE-C1- 4 009 387
- JP-A- H10 211 482
- US-A1- 2014 037 379

## Description

### BACKGROUND OF THE INVENTION

### Field of the Invention

The present invention falls within the field of refuse landfill impervious systems. It relates to a refuse landfill impervious system, and in particular, to a refuse landfill impervious system capable of prolonging breakdown time of leachate and a manufacturing method thereof.

### Description of Related Art

The production of urban solid waste rapidly increases with the progressive urbanization and continuous improvement of people's living standards in China. Nowadays, the annual production volume of urban solid waste in China has been 240 million tons and is still rapidly increasing at a rate of 8% to 15% each year, topping the world in either the production volume or the increasing rate thereof. Large amounts of solid waste directly damage urban security and stability. Sanitary refuse landfills, with low technology doorsill and large disposal capacity, are the ultimate disposal means and currently one of the main measures for waste handling and disposal, accounting for 90.5% of the total disposal capacity.

The urban solid waste in China contains high content of kitchen waste and high content of water, making it easy to produce high leachate levels after dumping and accordingly easy to cause landslides which may damage the urban environment and menace citizens' lives and property. High leachate levels may also destroy antifouling barriers and cause an early breakdown of pollutants, resultingly polluting the surronding environment of refuse landfills and underground water. Once the underground environment has been destroyed, it will be tremendously difficult to restore it and bring about incalculable serious consequences. Document US 2014/0037379 A1 discloses a landfill cover system for preventing water infiltration into a landfill.

For landfill impervious systems, the Ministry of Housing and Urban-Rural Development of People's Republic of China has issued "Household Waste Sanitary Landfill Impervious System Engineering Technical Specifications CJJ113-2007", providing that a double-layer impervious structure shall be sequentially stacked from top to bottom as the follow: a leachate collection and drainage layer, a main impervious layer (containing impervious materials and protective materials), permeation testing layer, a sub impervious layer, a base layer and a groundwater collection and drainage layer. In the double-layer impervious structure, it shall be able to timely test the perviousness of the main impervious layer by the permeation testing layer.

Currently, the two HDPE (high-density polyethylene) geomembrane layers, respectively located at top and bottom of the double-layer structure, tend to become aging and porous. Under a high leachate level, once the HDPE layer has been destroyed or broken down by pollutants, the leachate will soon reach the lower compacted clay layer and break down it, seriously threatening the underground environment. There are two prior arts for preventing landfill leachate from breaking down the impervious system: the first one is to mix in additives to modify the clay impervious layer, thereby enhancing the clay intensity and improving the clay imperviousness; and the second one is to lay geosynthetics and bagged soil protection layer on the basis of the HDPE geomembrane impervious layer so as to enhance the protection for HDPE geomembrane. The first prior art involves complex operation, making it time consuming and labor intensive and inaccessible to industrialization. The second prior art, though having enhanced the protection for HDPE geomembrane, is unable to improve the imperviousness and yet also time consuming and labor intensive.

### SUMMARY OF THE INVENTION

The object of the present invention is to provide a refuse landfill impervious system capable of prolonging breakdown time of leachate and a manufacturing method thereof, so as to overcome the deficiencies of prior arts.

To achieve the above object, the present invention adopts the following technical solutions: a refuse landfill impervious system capable of prolonging breakdown time of leachate, comprising a leachate collection and drainage layer, a first HDPE (high-density polyethylene) geomembrane impervious layer, a clay layer and a groundwater collection and drainage layer which are sequentially stacked from top to bottom. The clay layer is composed of a lower clay layer, a middle clay layer and an upper clay layer which are sequentially arranged, wherein the middle clay layer is filled with a medium-fine sand layer laid with sands of particle sizes ranging from 0.1mm to 0.5 mm and of water contents≤ 3%, wherein the saturated permeability coefficient of the medium-fine sand layer varies from 1 × 10⁻⁵ to 1 × 10⁻³ cm/s.

Preferably, the thickness of the middle fine sand layer is ≥ 200 cm.

Preferably, the saturated permeability coefficient of the clay layer is ≤ 1×10⁻⁷ cm/s; the thicknesses of the middle clay layer is ≥ 30 cm and the thicknesses of the lower clay layer is ≥ 30 cm.

Preferably, a leachate permeation testing layer is laid between the clay layer and the first HDPE geomembrane impervious layer.

Further, a second HDPE geomembrane impervious layer is laid between the leachate permeation testing layer and the clay layer.

The present invention also provides a manufacturing method of the refuse landfill impervious system capable of prolonging breakdown time of leachate, comprising the following steps:
(a) drying sands until the water contents thereof are ≤ 3%, and then screening out medium-fine sands of particle sizes ranging from 0.1 mm to 0.5 mm;
(b) digging a pit for dumping the solid waste and laying the underground water collection and drainage layer (6) therein, then laying the compacted lower clay layer (51) on the top of the underground water collection and drainage layer (6);
(c) laying and compacting medium-fine sands on the lower clay layer (51) to form the medium-fine sand layer (7); laying the compacted middle clay layer (52) around the medium-fine sand layer (7); then laying the compacted upper clay layer (53) on the top of the medium-fine sand layer (7) and the middle clay layer (52);
(d) finally, on the top of the upper clay layer (53), sequentially laying the first HDPE geomembrane impervious layer (2) and the leachate collection and drainage layer (1) from bottom to top.
The above step (a) and step (b) are in no particular orders.

Preferably, in step (a), the drying process involves keeping the sands exposed to sunlight for 24 hours or placing the sands into a large-size oven and baking them at a temperature of 105-110 °C to a constant weight.

Preferably, in step (d), sequentially laying the second HDPE geomembrane impervious layer (4) and the leachate permeation testing layer (3) prior to laying the first HDPE geomembrane impervious layer (2).

With the application of the above technical solutions, the present invention, compared to prior art, has the following advantages:
by filling the middle clay layer with a medium-fine sand layer with the saturated permeability coefficient varying from 1×10⁻⁵ to 1×10⁻³ cm/s and laid with sands of particle sizes ranging from 0.1 mm to 0.5 mm and of water contents ≤ 3%, the current refuse landfill impervious system capable of prolonging breakdown time of leachate is able to show unexpected effects: tremendously prolonging the breakdown time of leachate and increasing impervious effects of the refuse landfill impervious layer;
the medium-fine sands are low in cost and readily available as sands stockyards widely spread in China; and
the current refuse landfill impervious system has a simple structure and is able to effectively prevent the groundwater from permeating in order to saturate the medium-fine sand layer, keeping the medium-fine sand layer in an unsaturated state all the time.

### BREIF DESCRIPTION OF DRAWINGS

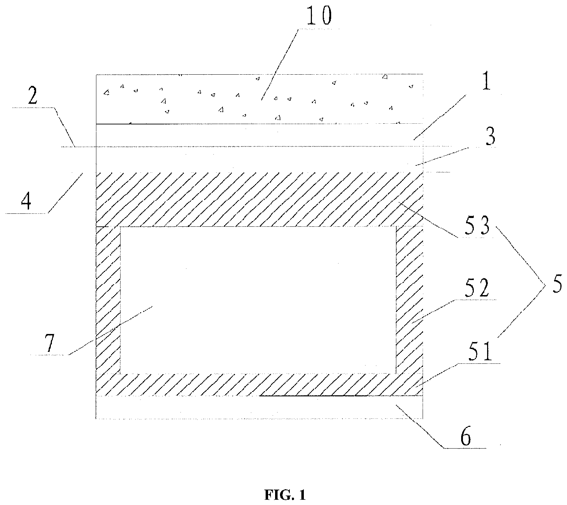

FIG. 1 is a structural schematic diagramof the refuse landfill impervious system capable of prolonging breakdown time of leachate of this present invention; wherein 1: a leachate collection and drainage layer; 2: a first HDPE geomembrane impervious layer; 3: a leachate permeation testing layer; 4: a second HDPE geomembrane impervious layer; 5: a clay layer; 51: a lower clay layer; 52: a middle clay layer; 53: a upper clay layer; 6: a underground water collection and drainage layer; 7: a medium-fine sand layer; 10: solid waste.

### DETAILED DESCRIPTION OF EMBODIMENT

Hereafter, preferable embodiments of the present invention will described in combination with the accompany drawings:
As shown in FIG. 1, the refuse landfill impervious system capable of prolonging breakdown time of leachate from top to bottom sequentially comprises a leachate collection and drainage layer (1), a first HDPE geomembrane impervious layer (2), a clay layer (5) and a groundwater collection and drainage layer (6);
Wherein, the clay layer (5) comprises a lower clay layer (51), a middle clay layer (52) and an upper clay layer (53) which are sequentially arranged; the middle clay layer is filled with a medium-fine sand layer (7) laid with sands of particle sizes ranging from 0.1mm to 0.5 mm and of water contents ≤ 3%, so that the saturated permeability coefficient of the medium-fine sand layer varies from 1×10⁻⁵ to 1×10⁻³ cm/s. The current refuse landfill impervious system has unexpected effects: though with a simple structure, the system is able to greatly prolong the breakdown time of leachate and to increase the impervious effects of the landfill impervious layer; further, the system is low in cost as sands stockyards widely spread in China and readily available; the system does not require use of chemicals, preventing the surrounding environment from secondary pollution so as to benefit the environment; the division of the clay layer (5) into three parts can effectively prevent underground water from infiltrating into and saturating the medium-fine sand layer (7), so as to keep the medium-fine sand layer in an unsaturated state all the time.

In the present embodiment, the thickness of the medium-fine sand layer (7) is preferably 200 cm at least to further prolong the breakdown time of leachate. The saturated permeability coefficient of the clay layer (5) is no more than 1×10⁻⁷ cm/s, and the thicknesses of the middle clay layer (52) and the lower clay layer (51) are both 30 cm at least, so as to further prevent underground water from invading the medium-fine sand layer (7). A leachate permeation testing layer (3) is laid between the clay layer (5) and the first HDPE geomembrane impervious layer (2); and a second HDPE geomembrane impervious layer (4) is laid between the leachate permeation testing layer (3) and the clay layer (5), so as to increase the imperviousness of the landfill impervious system.

A manufacturing method for the above refuse landfill impervious system capable of prolonging breakdown time of leachate, comprising the following steps:
(a) drying sands until the water contents thereof are not more than 3%, and then screening out medium-fine sands of particles sizes ranging from 0.1mm to 0.5 mm; the drying process involves keeping the sands exposed to sunlight for 24 hours or placing the sands into a large-size oven and baking them at a temperature of 105-110 °C for 6 hours to a constant weight; when measuring the water content of sands, randomly selecting 3 sand samples per 10 m³ for sampling, and measuring the water content in accordance with the requirements of China's "Standards for Geotechnical Test Method " BG/T50123-1999.
(b) digging a pit on the solid waste dumping ground and laying the underground water collection and drainage layer (6) therein, then laying the compacted lower clay layer (51) on the top of the underground water collection and drainage layer (6);
(c) laying and compacting medium-fine sands in the lower clay layer (51) to form the medium-fine sand layer (7); next, laying the compacted middle clay layer (52) around the medium-fine sand layer (7); then laying the compacted upper clay layer (53) on the top of the medium-fine sand layer (7) and the middle clay layer (52);
(d) finally, on the top of the upper clay layer (53), sequentially laying the first HDPE geomembrane impervious layer (2) and the leachate collection and drainage layer (1) from bottom to top.

The above step (a) and step (b) are in no particular orders. Construction should be conducted on clear days, and as soon as the laying of the medium-fine sand layer (7) is completed, the clay layer (5) should be laid and compacted thereon to prevent the medium-fine sand layer (7) from absorbing water in the process of construction, causing an increase of water content.

The above embodiment is only to illustrate the technical idea and features of the present invention, aiming to teach persons skilled in the art about the content of the present invention so as to enable them to practice it, yet not to limit the scope of the claimed invention. It will be understood that any equivalent alteration or modification made without departing from the principles of the present invention shall fall within the scope of the claimed invention

## Claims

1. A refuse landfill impervious system capable of prolonging breakdown time of leachate, comprising a leachate collection and drainage layer (1), a first HDPE geomembrane impervious layer (2), a clay layer (5) and a groundwater collection and drainage layer (6) which are sequentially stacked from top to bottom, and the clay layer (5) comprises a lower clay layer (51), a middle clay layer (52) and an upper clay layer (53) which are sequentially arranged, wherein the middle clay layer is filled with a medium-fine sand layer (7) laid with sands of particle sizes ranging from 0.1mm to 0.5 mm and water contents no more than 3%, so that the saturated permeability coefficient of the medium-fine sand layer varies from 1×10⁻⁵ to 1×10⁻³ cm/s.

2. The refuse landfill system capable of prolonging breakdown time of leachate according to claim 1, wherein the thickness of the medium-fine layer (7) is at least 200 cm.

3. The refuse landfill system capable of prolonging breakdown time of leachate according to claim 2, wherein the saturated permeability coefficient of the clay layer (5) is no more than 1×10⁻⁷ cm/s, and the thicknesses of the middle clay layer (52) and the lower clay layer (51) are both 30 cm at least.

4. The refuse landfill system capable of prolonging breakdown time of leachate according to claim 1, wherein a leachate permeation testing layer (3) is laid between the clay layer (5) and the first HDPE geomembrane impervious layer (2).

5. The refuse landfill system capable of prolonging breakdown time of leachate according to claim 4, wherein a second HDPE geomembrane impervious layer (4) is laid between the leachate permeation testing layer (3) and the clay layer (5).

6. A method for manufacturing the refuse landfill system capable of prolonging breakdown time of leachate according to any one of claims 1 to 5, comprising:
(a) drying sands until the water contents thereof are not more than 3%, and then screening out medium-fine sands of particle sizes ranging from 0.1 mm to 0.5 mm;
(b) digging a pit on the solid waste dumping ground and laying the underground water collection and drainage layer (6) therein, then laying the compacted lower clay layer (51) on the top of the underground water collection and drainage layer (6);
(c) laying and compacting medium-fine sands in the lower clay layer (51) to form the medium-fine sand layer (7); next, laying the compacted middle clay layer (52) around the medium-fine sand layer (7); then laying the compacted upper clay layer (53) on the top of the medium-fine sand layer (7) and the middle clay layer (52);
(d) finally, on the top of the upper clay layer (53), sequentially laying the first HDPE geomembrane impervious layer (2) and the leachate collection and drainage layer (1) from bottom to top;
the above step (a) and step (b) are in no particular order.

7. The method for manufacturing the refuse landfill system capable of prolonging breakdown time of leachate according to claim 6, wherein in step (a), the drying process involves keeping the sands exposed to sunlight for 24 hours or placing the sands into a large-size oven and baking them at a temperature of 105-110 °C to a constant weight.

8. The method for manufacturing the refuse landfill system capable of prolonging breakdown time of leachate according to claim 6, wherein in step (d), sequentially laying the second HDPE geomembrane impervious layer (4) and the leachate permeation testing layer (3) prior to laying the first HDPE geomembrane impervious layer (2).

## Patentansprüche

1. Abfalldeponieversiegelungssystem, das in der Lage ist, die Durchbruchzeit von Sickerflüssigkeit zu verlängern, umfassend eine Sickerflüssigkeitssammel- und Drainageschicht (1), eine erste undurchlässige HDPE-Geomembran-Schicht (2), eine Tonschicht (5) und eine Grundwassersammel- und Drainageschicht (6), die sequentiell von oben nach unten gestapelt sind, und die Tonschicht (5) eine untere Tonschicht (51), eine mittlere Tonschicht (52) und eine obere Tonschicht (53) umfasst, die sequentiell angeordnet sind, wobei die mittlere Tonschicht mit einer mittelfeinen Sandschicht (7) gefüllt ist, die mit Sanden von Partikelgrößen in einem Bereich von 0,1 mm bis 0,5 mm und Wassergehalten von nicht mehr als 3 % angelegt ist, so dass der gesättigte Permeabilitätskoeffizient der mittelfeinen Sandschicht von 1×10⁻⁵ bis 1×10⁻³ cm/s variiert.

2. Abfalldeponiesystem, das in der Lage ist, die Durchbruchzeit von Sickerflüssigkeit zu verlängern, nach Anspruch 1, wobei die Dicke der mittelfeinen Schicht (7) mindestens 200 cm ist.

3. Abfalldeponiesystem, das in der Lage ist, die Durchbruchzeit von Sickerflüssigkeit zu verlängern, nach Anspruch 2, wobei der gesättigte Permeabilitätskoeffizient der Tonschicht (5) nicht mehr als 1×10⁻⁷ cm/s ist und die Dicken der mittleren Tonschicht (52) und der unteren Tonschicht (51) beide mindestens 30 cm sind.

4. Abfalldeponiesystem, das in der Lage ist, die Durchbruchzeit von Sickerflüssigkeit zu verlängern, nach Anspruch 1, wobei eine Sickerflüssigkeitspermeationsprüfschicht (3) zwischen der Tonschicht (5) und der ersten undurchlässigen HDPE-Geomembran-Schicht (2) angelegt ist.

5. Abfalldeponiesystem, das in der Lage ist, die Durchbruchzeit von Sickerflüssigkeit zu verlängern, nach Anspruch 4, wobei eine zweite undurchlässige HDPE-Geomembran-Schicht (4) zwischen der Sickerflüssigkeitspermeationsprüfschicht (3) und der Tonschicht (5) angelegt ist.

6. Verfahren zum Herstellen des Abfalldeponiesystems, das in der Lage ist, die Durchbruchzeit von Sickerflüssigkeit zu verlängern, nach einem der Ansprüche 1 bis 5, umfassend:
a) Trocknen von Sanden, bis die Wassergehalte davon nicht mehr als 3 % sind, und dann Aussieben von mittelfeinen Sanden mit Partikelgrößen in einem Bereich von 0,1 mm bis 0,5 mm;
b) Ausheben einer Grube auf der Feststoffabfall-Mülldeponie und Verlegen der unterirdischen Wassersammel- und Drainageschicht (6) darin, dann Verlegen der verdichteten unteren Tonschicht (51) oben auf der unterirdischen Wassersammel- und Drainageschicht (6);
(c) Verlegen und Verdichten von mittelfeinen Sanden in der unteren Tonschicht (51), um die mittelfeine Sandschicht (7) zu bilden; anschließend Verlegen der verdichteten mittleren Tonschicht (52) um die mittelfeine Sandschicht (7) herum; dann Verlegen der verdichteten oberen Tonschicht (53) oben auf der mittelfeinen Sandschicht (7) und der mittleren Tonschicht (52);
(d) schließlich, oben auf der oberen Tonschicht (53), sequentielles Verlegen der ersten undurchlässigen HDPE-Geomembran-Schicht (2) und der Sickerflüssigkeitssammel- und Drainageschicht (1) von unten nach oben;
der vorangehende Schritt (a) und Schritt (b) sind in keiner bestimmten Reihenfolge.

7. Verfahren zum Herstellen des Abfalldeponiesystems, das in der Lage ist, die Durchbruchzeit von Sickerflüssigkeit zu verlängern, nach Anspruch 6, wobei das Trocknungsverfahren in Schritt (a) umfasst, die Sande für 24 Stunden dem Sonnenlicht ausgesetzt zu halten oder die Sande in einen Großofen zu platzieren und sie bei einer Temperatur von 105-110 °C auf ein konstantes Gewicht zu trocknen.

8. Verfahren zum Herstellen des Abfalldeponiesystems, das in der Lage ist, die Durchbruchzeit von Sickerflüssigkeit zu verlängern, nach Anspruch 6, wobei in Schritt (d), vor dem Verlegen der ersten undurchlässigen HDPE-Geomembran-Schicht (2), die zweite undurchlässige HDPE-Geomembran-Schicht (4) und die Sickerflüssigkeitspermeationsprüfschicht (3) sequentiell verlegt werden.

## Revendications

1. Système étanche de décharge d'ordures capable de prolonger le temps de décomposition de lixiviat, comprenant une couche de collecte et de drainage de lixiviat (1), une première couche étanche de géomembrane de HDPE (2), une couche d'argile (5) et une couche de collecte et de drainage d'eaux souterraines (6) qui sont séquentiellement empilées du haut vers le bas, et la couche d'argile (5) comprend une couche d'argile inférieure (51), une couche d'argile moyenne (52) et une couche d'argile supérieure (53) qui sont agencées séquentiellement, dans lequel la couche d'argile moyenne est remplie avec une couche de sable moyen-fin (7) déposée avec des sables ayant des tailles de particule dans la plage de 0,1 mm à 0,5 mm et des teneurs en eau de pas plus de 3 %, de sorte que le coefficient de perméabilité saturée de la couche de sable moyen-fin varie de 1×10⁻⁵ à 1×10⁻³ cm/s.

2. Système de décharge d'ordures capable de prolonger le temps de décomposition de lixiviat selon la revendication 1, dans lequel l'épaisseur de la couche moyenne-fine (7) est d'au moins 200 cm.

3. Système de décharge d'ordures capable de prolonger le temps de décomposition de lixiviat selon la revendication 2, dans lequel le coefficient de perméabilité saturée de la couche d'argile (5) est de pas plus de 1×10⁻⁷ cm/s, et les épaisseurs de la couche d'argile moyenne (52) et la couche d'argile inférieure (51) sont toutes d'au moins 30 cm.

4. Système de décharge d'ordures capable de prolonger le temps de décomposition de lixiviat selon la revendication 1, dans lequel une couche d'essai de perméation de lixiviat (3) est disposée entre la couche d'argile (5) et la première couche étanche de géomembrane de HDPE (2).

5. Système de décharge d'ordures capable de prolonger le temps de décomposition de lixiviat selon la revendication 4, dans lequel une deuxième couche étanche de géomembrane de HDPE (4) est disposée entre la couche d'essai de perméation de lixiviat (3) et la couche d'argile (5).

6. Procédé de fabrication du système de décharge d'ordures capable de prolonger le temps de décomposition de lixiviat selon l'une quelconque des revendications 1 à 5, comprenant :
(a) le séchage de sables jusqu'à ce que la teneur en eau ne soit pas supérieure à 3 %, puis tamisage des sables moyens-fins ayant des tailles de particule dans la plage de 0,1 mm à 0,5 mm ;
(b) l'excavation d'une fosse sur le sol de dépôt de déchets solides et le dépôt de la couche de collecte et de drainage d'eaux souterraines (6) dans celle-ci, puis le dépôt de la couche d'argile inférieure tassée (51) au-dessus de la couche de collecte et de drainage d'eaux souterraines (6) ;
(c) le dépôt et le tassement de sables moyens-fins dans la couche d'argile inférieure (51) pour former la couche de sable moyen-fin (7); ensuite, le dépôt de la couche d'argile moyenne tassée (52) autour de la couche de sable moyen-fin (7) ; puis le dépôt de la couche d'argile supérieure compactée (53) au-dessus de la couche de sable moyen-fin (7) et la couche d'argile moyenne (52) ;
(d) enfin, au-dessus de la couche d'argile supérieure (53), le dépôt séquentiel de la première couche étanche de géomembrane de HDPE (2) et de la couche de collecte et de drainage de lixiviat (1) du bas vers le haut ;
l'étape (a) et l'étape (b) ci-dessus ne sont dans aucun ordre particulier.

7. Procédé de fabrication du système de décharge d'ordures capable de prolonger le temps de décomposition de lixiviat selon la revendication 6, dans lequel, dans l'étape (a), le processus de séchage met en oeuvre le maintien des sables exposés à la lumière du soleil pendant 24 heures ou le placement des sables dans un four de grande taille et la cuisson de ceux-ci à une température de 105 à 110 °C jusqu'à un poids constant.

8. Procédé de fabrication du système de décharge d'ordures capable de prolonger le temps de décomposition de lixiviat selon la revendication 6, comprenant, dans l'étape (d), le dépôt séquentiel de la deuxième couche étanche de géomembrane de HDPE (4) et de la couche d'essai de perméation de lixiviat (3) avant le dépôt de la première couche étanche de géomembrane de HDPE (2).
